Europäisches Patentamt

European Patent Office

Office européen des brevets

(11) Publication number: **0 355 207 B1**

(12) EUROPEAN PATENT SPECIFICATION

(45) Date of publication of patent specification: **29.07.92**  (51) Int. Cl.⁵: **C01B 3/00**, C01B 3/50

(21) Application number: **88201785.8**

(22) Date of filing: **22.08.88**

(54) **Process for activating metal hydride former particles.**

(43) Date of publication of application:
**28.02.90 Bulletin 90/09**

(45) Publication of the grant of the patent:
**29.07.92 Bulletin 92/31**

(84) Designated Contracting States:
**AT BE CH DE ES FR GB GR IT LI NL SE**

(56) References cited:
**EP-A- 0 094 136**
**DE-A- 2 623 213**

(73) Proprietor: **DSM N.V.**
**Het Overloon 1**
**NL-6411 TE Heerlen(NL)**

(72) Inventor: **Tinge, Johan Thomas**
**W. van Gelre Gulikstrasse 17**
**NL-6137 HA Sittard(NL)**

Rank Xerox (UK) Business Services

## Description

The present invention relates to a process for activating metal hydride former particles used in suspension in an inert liquid for the absorption of hydrogen.

It is known to use metal hydride formers for the absorption of hydrogen either to store hydrogen or to remove this gas from a mixture of gases containing the same.

The hydrogen absorption by metal hydride formers is due to the capability of the same to form metal hydrides from which reversibly by heating the hydrogen may be released. Suitable metal hydride formers are known, and they are sometimes also called "rechargeable metal hydrides" or simply "metal hydrides". Typically these metal hydride formers are substances or mixtures of substances of the group consisting of rare earth elements, $MNi_x$, $MCo_x$, FeTi, $Mg_2Cu_y$, $Mg_2Ni_y$ and Pd, where M = Ca, Zr or a lanthanide; $1 \leq x \leq 5,5$; $0 \leq y \leq 1$ (see also "journal of the Less-Common Metals", 74, (1980 (435-443)) and "Chem. Tech.", Dec. 1981, 754-762). EP 94 136 describes a process for the separation of hydrogen gas from a mixture of gases containing the hydrogen gas by contacting in a contacting zone a continuous flow of a suspension of metal hydride former particles in a fluid medium, especially an inert liquid, with a stream of the mixture of gases, and allowing the particles to form a hydride to substantially remove the hydrogen gas from the stream. The hydrided particles can then be thermally decomposed to liberate hydrogen and to regenerate the metal hydride former particles.

Due to atoms and/or molecules absorbed on the surface of the metal hydride former particles which hinder the free entrance of hydrogen into these particles it is advisable to activate the metal hydride former particles before a new cycle of hydrogen absorption by hydride formation is carried out. In AIChE-Journal, November 1986, Vol. 31, No. 11 on the pages 1821 to 1831 a method for activating metal hydride former particles is described comprising the following steps:

1. Introduction of dry metal hydride former particles into a dry reactor.
2. Evacuation of the reactor.
3. Filling of the reactor with an inert gas (for example helium) to atmospheric pressure.
4. Heating the reactor contents to approximately 150° C.
5. Cooling the reactor contents to approximately 50° C.
6. Evacuation of the reactor until an absolute pressure of ca. 1 to 2 Pa has been reached.
7. Filling the reactor with hydrogen until a superatmospheric pressure has been reached.
8. Repeating the steps 6 and 7 approximately 10 times, each step requiring approximately 3 to 4 hours.
9. Introducing degased liquid (for example oil) into the evacuated reactor.
10. Filling the reactor with purified hydrogen.
11. Slowly releasing the pressure and subsequently evacuating the reactor.
12. Repeating the steps 10 and 11 several times (approximately 10 times).

Therefore, this known activation encompasses an activation both in the liquid and in the gaseous phase. This known process is rather time-consuming.

Therefore, the object of the present invention is the provision of a process for activating metal hydrid former particles used in suspension in an inert liquid for the absorption of hydrogen comprising less time-consuming steps than the above mentioned known process and nevertheless yielding highly activated metal hydride former particles.

According to the present invention a process for activating metal hydrid former particles used in suspension in an inert liquid for the absorption of hydrogen is provided which is characterized by

a) heating in a reactor a suspension of dried metal hydride former particles in a degassed inert liquid to elevated temperatures,

b) evacuating the reactor,

c) introducing hydrogen into the reactor until a pressure above the hydrogen partial pressure has been achieved,

d) slowly releasing the pressure and

e) evacuating the reactor at elevated temperatures.

Surprisingly it has been found that by this process which contrary to the known above outlined process omits the activation in the gaseous phase highly activated metal hydride former particles can be obtained which can be used for the absorption of hydrogen in suspension of these particles in an inert liquid.

Additionally, the process of the present invention can be carried out in the same apparatus in which the hydrogen liberation is carried out.

Further, the process of the present application can be applied to poisoned metal hydride former particles, for example particles which have been poisoned by oxygen and sulfur containing compounds.

Preferably, the steps c) and d) are repeated several times, for example 2 times to 4 times to achieve a higher degree of activation.

In step a) the volume percentage of the metal hydride former particles in the inert liquid preferably is between 1 and 25.

The particles preferably have a particle size between 1 and and 2000 micron. The inert liquid which is used in step a) preferably has a boiling point between 50° C and 300° C and consists for example of a mineral or a synthetic heat-resistant oil. Typical examples of inert liquids which can be used in step a) include silicon oils, paraffin oils etc. (see for example AIChE-Journal, November 1986, vol. 31, no. II, p. 1821-1831, Chem. Eng.Sci., vol. 41, p. 867-873 (1986), US-patent applications as published by National Technical Information Services under Nr. 85044354 and 87064728).

Among these especially preferred are undecane or Silicon Oil PD5 (Bayer).

In step a) the suspension preferably is heated to a temperature between 20° C and 200° C, more preferably 50° C to 100° C.

In step b) the reactor is evacuated preferably to a vacuum between 0.01 mbar and 500 mbar, more preferably between 0.1 mbar and 200 mbar.

In step c) preferably a hydrogen pressure above the hydrogen partial pressure between 1 and 200 bar is generated, a range between 10 and 100 bar being more preferred. Preferably the duration of the hydrogen treatment is between 0.01 hours and 4 hours.

In step e) the evacuation of the reactor preferably is carried out at a temperature between 20° C and 200°C, preferably between 50° C and 100° C.

In step e) preferably a vacuum between 1 and 500 mbar is generated.

It is advantageous to provide a stripping by an inert gas like helium in certain intervals during the activation process of the present application, preferably between the steps a) and b).

Preferably the reactor contents are stirred by any conventional stirring means in order to prevent sedimentation.

The process of the present invention can be carried out as integral part of a continuous or batchwise hydrogen absorption/desorption process, for example of the process described in the already mentioned EP 94 136 by introducing activated metal hydride former particles produced according to the present invention into the absorption vessel (for example the absorption vessel 22 according to the continuous process as illustrated by fig. 2), and by recycling desorbed particles (for example particles from the desorption vessel 26) to the reactor in which the activation process of the present invention is carried out.

The present invention will be described in further detail by way of the following non-limiting example.

Example

A suspension of 128 g $LaNi_{4.7}Al_{0.3}$ having a particle size between 500 and 2000 micron in 195 ml degassed PD5-oil (Bayer) (this corresponds $\epsilon_s$ = 10.3 volume %, $M_{hydr.}$ = 423 g/mole, $\zeta$ = 6370 $kg/m^3$) was introduced into a reactor having a total volume of 0,5 l and being provided with baffles, a 4-blade turbine stirrer and surrounded by a thermostat in order to keep the temperature of the reactor contents constant.

The reactor contents was heated to a temperature of 90° C during 1 1/2 hours and maintained at this temperature for 3 hours.

Subsequently the reactor was evacuated to a vacuum of 0.5 mbar while maintaining the above mentioned temperature.

Subsequently hydrogen was introduced into the reactor until a hydrogen partial pressure of 31 bar had been achieved. This pressure was maintained during 4 hours, the temperature being 20° C.

Then the pressure was slowly released to 2.2 bar, the temperature being 80° C.

Subsequently the reactor was evacuated to a pressure of 0.5 mbar, the temperature being 80° C.

Then the reactor was brought to ambient temperature and the particles were tested for hydrogen absorption capacity in the following manner: Hydrogen was introduced into the reactor until a hydrogen partial pressure of 50 bar had been achieved. The hydrogen was absorbed in the slurry at a stirrer speed of 1500 r.p.m. During the absorption the temperature was kept constant. After 1.0 hour the slurry was transferred quantitatively into another vessel. Then the pressure in this vessel was reduced to 1 bar and the temperature was increased to 80° C. The amount of desorbed hydrogen was measured by a volumentric method. The absorption capacity of the particles was 1.02 moles hydrogen atoms per mole metal atoms.

A control run was carried out by using the same particles which had not been treated according to the present invention. Their hydrogen absorption capacity was less than 0.01 moles hydrogen atoms per mole metal atoms.

## Claims

1. A process for activating metal hydride former particles used in suspension in an inert liquid for the absorption of hydrogen, characterized by

   a) heating in a reactor a suspension of dried metal hydride former particles in a degassed inert liquid to elevated temperatures,
   b) evacuating the reactor,
   c) introducing hydrogen into the reactor until a pressure above the hydrogen partial pressure has been achieved,
   d) slowly releasing the pressure and
   e) evacuating the reactor at elevated temperatures.

**2.** A process according to claim 1, characterized in that the steps c) and d) are repeated several times.

**3.** A process according to the claims 1 to 2, characterized in that in step a) the volume percentage of the metal hydride former particles in the inert liquid preferably is between 1 and 25.

**4.** A process according to the claims 1 to 3, characterized in that in step a) the inert liquid used as suspending agent is boiling between 50° C and 300°C.

**5.** A process according to the claims 1 to 4, characterized in that in step a) the suspension is heated to a temperature between 20° C and 200° C.

**6.** A process according to the claims 1 to 5, characterized in that in step b) the reactor is evacuated to a vacuum between 0.01 mbar and 500 mbar.

**7.** A process according to the claims 1 to 6, characterized in that in step c) a hydrogen pressure above the hydrogen partial pressure between 1 and 200 bar is generated.

**8.** A process according to the claims 1 to 7, characterized in that in step e) the evacuation of the reactor is carried out at a temperature between 20° C and 200°C.

**9.** A process according to the claims 1 to 8, characterized in that in step e) a vacuum between 1 and 500 mbar is generated.

**10.** A process according to one of the preceding claims, characterized in that in intervalls a stripping by an inert gas is carried out.

**11.** A process according to the preceding claims, characterized in that the activation process is carried out as integral part of a hydrogen absorption/desorption process.

**Revendications**

**1.** Procédé d'activation de particules d'un produit capable de former des hydrures métalliques, qu'on utilise en suspension au sein d'un liquide inerte pour l'absorption d'hydrogène, caractérisé en ce qu'il consiste :

(a) à chauffer dans un réacteur une suspension des particules séchées d'un produit capable de former des hydrures métalliques au sein d'un liquide inerte dégazéifié jusqu'à des températures élevées,

(b) à faire le vide dans le réacteur,

(c) à introduire de l'hydrogène dans le réacteur jusqu'à établir une pression supérieure à la pression partielle d'hydrogène,

(d) à mettre lentement à l'échappement, et

(e) à faire le vide dans le réacteur à une température élevée.

**2.** Procédé selon la revendication 1, caractérisé en ce qu'on répète à plusieurs reprises les stades (c) et (d).

**3.** Procédé selon les revendications 1 et 2, caractérisé en ce qu'au stade (a), le pourcentage en volume des particules du produit capable de former des hydrures métalliques dans le liquide inerte est compris de préférence entre 1 et 25.

**4.** Procédé selon les revendications 1 à 3, caractérisé en ce qu au stade (a), le liquide inerte utilisé comme agent de suspension bout entre 50 et 300°C.

**5.** Procédé selon les revendications 1 à 4, caractérisé en ce qu'au stade (a), on chauffe la suspension à une température entre 20 et 200°C.

**6.** Procédé selon les revendications 1 à 5, caractérisé en ce qu'au stade (b), on établit dans le réacteur un vide compris entre 0,01 et 500 mbars.

**7.** Procédé selon les revendications 1 à 6, caractérisé en ce qu'au stade (c), on établit une pression d' hydrogène supérieure à la pression partielle d'hydrogène de 1 à 200 bars.

**8.** Procédé selon les revendications 1 à 7, caractérisé en ce qu'au stade (e), on effectue l'établissement du vide dans le réacteur à une température entre 20 et 200°C.

**9.** Procédé selon les revendications 1 à 8, caractérisé en ce qu'au stade (e), on établit un vide entre 1 et 500 mbars.

**10.** Procédé selon l'une quelconque des revendications précédentes, caractérisé en ce qu'on effectue périodiquement une épuration par un gaz inerte.

**11.** Procédé selon les revendications précédentes, caractérisé en ce qu'on effectue le procédé d'activation comme une partie intégrante du procédé d'absorption/désorption d'hydrogène.

**Patentansprüche**

1.  Verfahren zum Aktivieren von Metallhydride bildenden Teilchen, die in Suspension in einer inerten Flüssigkeit für die Absorption von Wasserstoff verwendet werden, gekennzeichnet durch
    a) Erhitzen einer Suspension von getrockneten, Metallhydride bildenden Teilchen in einer entgasten inerten Flüssigkeit auf erhöhte Temperaturen in einem Reaktor,
    b) Evakuieren des Reaktors,
    c) Einführen von Wasserstoff in den Reaktor, bis ein Druck oberhalb des Wasserstoffpartialdruckes erreicht ist,
    d) langsames Ablassen des Druckes und
    e) Evakuieren des Reaktors bei erhöhten Temperaturen.

2.  Verfahren nach Anspruch 1, dadurch gekennzeichnet, daß die Schritte c) und d) mehrmals wiederholt werden.

3.  Verfahren nach den Ansprüchen 1 bis 2, dadurch gekennzeichnet, daß in Schritt a) der Volumsprozentsatz der Metallhydride bildenden Teilchen in der inerten Flüssigkeit vorzugsweise 1 bis 25 beträgt.

4.  Verfahren nach den Ansprüchen 1 bis 3, dadurch gekennzeichnet, daß in Schritt a) die als Suspendiermittel verwendete inerte Flüssigkeit bei 50 bis 300 °C siedet.

5.  Verfahren nach den Ansprüchen 1 bis 4, dadurch gekennzeichnet, daß in Schritt a) die Suspension auf eine Temperatur von 20 bis 200 °C erhitzt wird.

6.  Verfahren nach den Ansprüchen 1 bis 5, dadurch gekennzeichnet, daß in Schritt b) der Reaktor auf ein Vakuum von 0,01 bis 500 mbar evakuiert wird.

7.  Verfahren nach den Ansprüchen 1 bis 6, dadurch gekennzeichnet, daß in Schritt c) ein Wasserstoffdruck oberhalb des Wasserstoffpartialdruckes von 1 bis 200 bar erzeugt wird.

8.  Verfahren nach den Ansprüchen 1 bis 7, dadurch gekennzeichnet, daß in Schritt e) die Evakuierung des Reaktors bei einer Temperatur von 20 bis 200 °C durchgeführt wird.

9.  Verfahren nach den Ansprüchen 1 bis 8, dadurch gekennzeichnet, daß in Schritt e) ein Vakuum von 1 bis 500 mbar erzeugt wird.

10. Verfahren nach einem der vorhergehenden Ansprüche, dadurch gekennzeichnet, daß in Intervallen ein Abziehen durch ein inertes Gas durchgeführt wird.

11. Verfahren nach den vorhergehenden Ansprüchen, dadurch gekennzeichnet, daß das Aktivierungsverfahren als integrierender Teil eines Wasserstoffabsorptions/desorptionsverfahrens durchgeführt wird.